# EUROPÄISCHE PATENTSCHRIFT

(11) **EP 1 243 061 B1**
(45) Veröffentlichungstag und Bekanntmachung des Hinweises auf die Patenterteilung: **21.05.2003**
(21) Anmeldenummer: 00993466.2
(22) Anmeldetag: 06.12.2000
(51) Int. Cl.: H02J 13/00

(54) **VERFAHREN UND ANORDNUNG ZUM ERFASSEN UND DIGITALEN ÜBERTRAGEN VON ANALOGEN AUSGANGSMESSGRÖSSEN MEHRERER WANDLER**
METHOD AND SYSTEM FOR DETECTING AND DIGITALLY TRANSMITTING ANALOG OUTPUT MEASURED QUANTITIES OF A NUMBER OF TRANSDUCERS
PROCEDE ET SYSTEME POUR DETECTER ET TRANSMETTRE PAR VOIE NUMERIQUE DES GRANDEURS DE SORTIE ANALOGIQUES MESUREES DE PLUSIEURS TRANSDUCTEURS

(30) Priorität: 14.12.1999 DE 19961630
(43) Veröffentlichungstag der Anmeldung: 25.09.2002
(73) Patentinhaber: SIEMENS AKTIENGESELLSCHAFT, 80333 München (DE)
(72) Erfinder: WINKLER, Bert, 13357 Berlin (DE)
(86) Internationale Anmeldenummer: DE0004383
(87) Internationale Veröffentlichungsnummer: WO01045232

(56) Entgegenhaltungen:
- EP-A- 0 561 067
- EP-A- 0 602 718
- DE-A- 3 603 358
- US-A- 5 027 306

## Beschreibung

Die Erfindung bezieht sich auf ein Verfahren zum Erfassen und digitalen Übertragen von analogen Ausgangsmeßgrößen mehrerer Wandler zu einem Schutz- oder Feldgerät, bei dem die analogen Ausgangsmeßgrößen jedes Wandlers in digitale Meßgrößen umgesetzt werden, die digitalen Meßgrößen zu einem Datenkonzentrator übertragen werden, in dem Datenkonzentrator ein Telegramm mit den digitalen Meßgrößen der Wandler mit einer vorgegebenen Mindestabtastrate gebildet wird und das Telegramm zu dem Schutz- oder Feldgerät übertragen wird.

Bekanntlich wurde bisher beim Anschluß von Strom- oder Spannungswandlern eine analoge Punkt-zu-Punkt-Verbindung des jeweiligen Wandlers mit dem zugeordneten Schutz- oder Feldgerät realisiert. Jedes Schutz- oder Feldgerät enthielt zu diesem Zweck eine entsprechende Anzahl von Strom - und Spannungseingängen. Die Strom - und Spannungseingänge wurden durch spezielle Klemmen realisiert. Die Abtastung der Eingänge erfolgte gleichzeitig und synchron zum Programmablauf des entsprechenden Schutz - oder Feldgerätes mit einer Rate von z. B.1 ... 5 kAbtastungen/s. Zur galvanischen Entkopplung der Eingänge im Schutz- oder Feldgerät wurden Strom - und Spannungstransformatoren eingesetzt.

Nachteilig an diesem Verfahren bzw. dieser Anordnung sind die hohen erforderlichen Nennscheinleistungen der eingesetzten Wandler, da diese dadurch teuer werden. Deshalb versucht man seit mehreren Jahren, eine neue, leistungsärmere Schnittstelle zu definieren, die eine günstigere Dimensionierung der Wandler gestattet. Zur Zeit existieren Bestrebungen, eine Schnittstelle und einen Telegrammaufbau für die digitale Übertragung von Wandlerdaten festzulegen. Die Normentwürfe IEC 61850-9-1 und IEC 60044-8 sind Resultate dieser Bestrebungen. Beide Normentwürfe benutzen zur Übertragung der Wandlerdaten gleiche Telegramminhalte, aber unterschiedliche Übertragungsphysik. Bei dem Entwurf IEC 60044-8 wird zur Übertragung der Wandlerdaten eine synchrone Seriellschnittstelle mit 2,5 Mbit/s und Manchestercodierung vorgeschlagen.

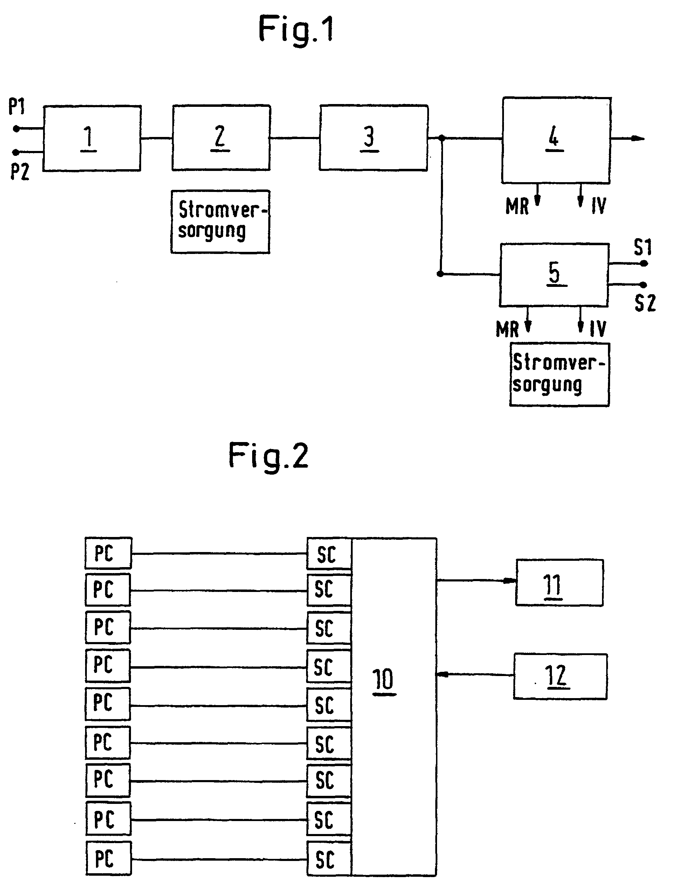

Fig. 1 zeigt ein Blockschaltbild aus diesen Normentwürfen, die die prinzipielle Anschaltung eines Wandlers 1 mit einem nachgeordneten Umsetzer, beispielsweise einem Analog-Digital-Umsetzer 2, an eine digitale Übertragungsstrecke 3 zeigen. Diese Normentwürfe sehen eine exakt definierte Übertragungszeit für ein Telegramm mit Abtastwerten vor. Es wird die Zeit zwischen dem Abtasten der analogen Ausgangsmeßgröße des jeweiligen Wandlers und dem Empfang des Telegrammes mit den Abtastwerten definiert. Sekundäre Umsetzer 4 und 5 sind zur Anpassung vorgesehen.

Wie Fig. 2 erkennen läßt, wird in den Normentwürfen vorgeschlagen, die digitalen Meßgrößen der Wandler für einen Abzweig in beispielsweise einem Umspannwerk mit Hilfe einer sogenannten "merging unit", einem Datenkonzentrator 10, zusammenzufassen. Der Datenkonzentrator 10 gibt an einem Ausgang 11 ein Telegramm mit den digitalen Meßgrößen an ein nicht gezeigtes Schutz- oder Feldgerät ab und ist über einen Hilfseingang 12 mit einem ebenfalls nicht dargestellten Taktgeber verbunden. In Fig. 2 sind die Elemente 1 und 2 gemäß Fig. 1 jeweils mit PC und die Elemente 4 und 5 mit SC bezeichnet.

Im Falle einer digitalen Übertragung der aus den Ausgangsmeßgrößen der Wandler gebildeten digitalen Meßgröße an den Datenkonzentrator wird von einer äquidistanten Abtastung der einzelnen analogen Ausgangsmeßgrößen der Wandler ausgegangen. Weiterhin wird davon ausgegangen, daß eine Zeitsynchronisierung der Abtastung der Ausgangsmeßgrößen der verschiedenen Strom- und Spannungwandler auch aus unterschiedlichen Abzweigen des Umspannwerkes erforderlich ist. Es bieten sich zwei Wege zur Synchronisierung der Abtastung an:

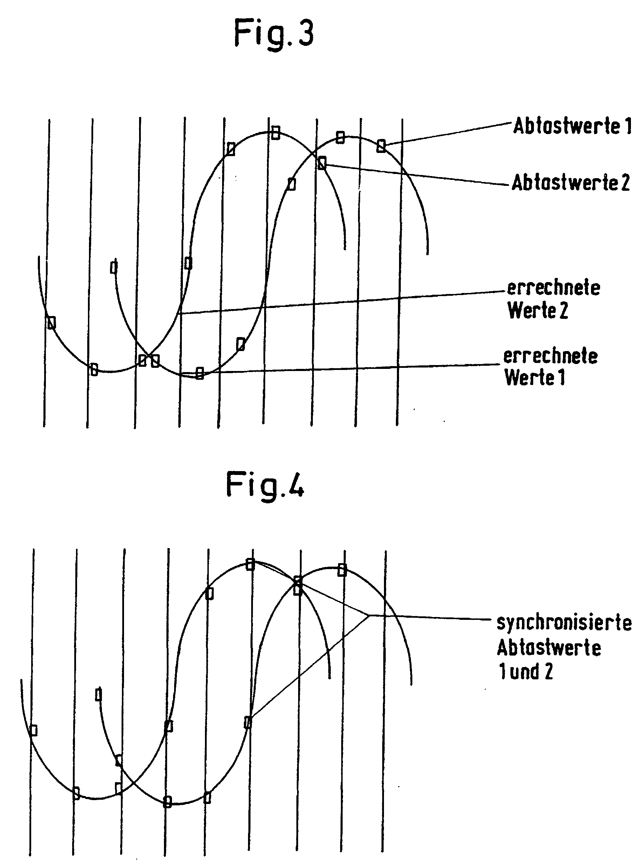

Der erste Weg könnte eine Benutzung des Interpolationsverfahrens sein. Dabei werden die unterschiedlichen, bekannten Zeitverzögerungen zwischen dem Abtasten der in Datagrammen verschickten Abtastwerte der Ausgangsmeßgrößen und dem Empfang der Datagramme in dem Datenkonzentrator und die meßbare Verzögerung zwischen dem Empfang der verschiedenen Datagramme der einzelnen Wandler dazu benutzt, um jedem empfangenen Abtastwert einen mikrosekundengenauen Abtastzeitpunkt zuzuordnen. Anschließend wird zwischen den einzelnen Abtastwerten interpoliert, um alle empfangenen Abtastwerte auf einen gemeinsamen Abtastzeitpunkt umzurechnen. Fig. 3 illustriert diesen Sachverhalt. Diese Fig. ist dem o.g. Normentwurf entnommen.

Nachteilig an diesem Verfahren ist der hohe Aufwand für die auf ca. 100ns genaue Zeitstempeleinrichtung für die empfangenen Datagramme und die erforderliche Einrichtung zur Interpolation der abgetasteten Signale in Echtzeit. Wird für die Interpolation ein Interpolationspolynom (z. B. rekursive Splines- Interpolation 3. Ordnung) verwendet, wird durch die Interpolation ein zusätzlicher Interpolationsfehler verursacht. Das Ergebnis der Interpolation läßt sich nicht mehr mit einer linearen Übertragungsfunktion beschreiben, d.h. der verwendete Algorithmus ist nichtlinear. Alternativ können für die Interpolation auch adaptive Filter eingesetzt werden. In diesem Fall wirkt sich die relativ hohe Gruppenlaufzeit der praktisch realisierbaren Allpaßfilter (oder Tiefpaßfilter mit einer Grenzfrequenz deutlich höher als die zu nutzende Bandbreite) ungünstig aus. Weiterhin wird zum Nachführen der adaptiven Filter in diesem Fall eine Einrichtung benötigt, mit der die nachzuführenden Filterkoeffizienten berechnet werden können. Für diesen Zweck eignet sich z.B. der LMS- Algorithmus. Um diesen Algorithmus zu realisieren, wird entweder ein digitaler Signalprozessor DSP oder ein komplexes ASIC benötigt.

Der zweite Weg besteht in der Nutzung eines umspannwerksweiten Synchronisationsimpulses. Da in einem Umspannwerk die von den Wandlern bereitgestellten Signale üblicherweise von verschiedenen Geräten benutzt werden, ist es eigentlich nie möglich, ein Umspannwerk in einzelne Abschnitte zu zerlegen, in denen ein gemeinsamer Abtasttakt für alle zu synchronisierenden Ausgangsmeßgrößen der Wandler benutzt werden kann. Es muß immer das gesamte Umspannwerk mit einem zentralen Abtasttakt versorgt werden In diesem Fall können alle Wandler synchron zueinander abgetastete Abtastwerte erzeugen. Fig. 4 zeigt das in dem bereits genannten Normentwurf verwendete Bild zur Illustation der synchron abgetasteten Signale.

Verfahren, die mit einem zentralen Takt zur Synchronisierung der Abtastung verschiedener Wandler arbeiten, sind aus Zuverlässigkeitsgründen grundsätzlich problematisch, da bei einem Ausfall des zentralen Taktes alle Wandlersignale des gesamten Umspannwerkes gemeinsam ausfallen. Rendundanzkonzepte können dieses grundsätzliche Problem nur verschleiern, da für die Synchronisation der Abtastung der zu verwendende Takt immer an einer zentralen Stelle erzeugt werden muß. Weiterhin ist bei diesem Verfahren grundsätzlich eine bidirektionale Verbindung an den einzelnen Wandlern erforderlich.

Bei dem Entwurf IEC 61850-9-1 wird eine 100 Mbit Ethernetschnittstelle vorgeschlagen. Bei einer Anwendung von Ethernet-Schnittstellen ist grundsätzlich ein zentraler Abtasttakt für die Sychronisierung der Abtastung erforderlich, da bei diesem Übertragungsverfahren keine konstante Übertragungszeit der Wandlersignale über den Ethernet-Bus garantiert werden kann. Damit handelt es sich bei dem in diesem Normentwurf vorgeschlagenen Verfahrens zur digitalen Übertragung von Wandlersignalen nur um eine andere Realisierungsvariante des 2. Verfahrens nach dem Normentwurf IEC 60044-8.

Beide Entwürfe sind auf die Anforderungen von Schutz - und Leittechnik zugeschnitten. Für Transientenrecording und Power Quality Messungen sind beide Entwürfe ungeeignet (zu geringe Abtastraten). Die nach IEC 60044-8 und 61850-9-1 erreichbaren Abtastraten liegen im Bereich von 1 ... 5 kAbtastungen/s. Die für Transientenrecording und Power Quality Messungen erforderlichen Abtastraten liegen im Bereich 5 ... 40 kAbtastungen. Diese beiden Entwürfe beschreiben nur die Schnittstelle zwischen Schaltanlage und Schutz- bzw. Feldgerät. Die Erfassung und Synchronisierung der Wandlerdaten aufeinander bleibt in diesen Lösungsvorschlägen offen.

Ein Verfahren der eingangs genannten Art läßt sich beispielsweise der DE 36 03 358 C3 entnehmen. Bei diesem vorbekannten Verfahren werden aus von Meßwandlern gewonnenen und digital umgesetzten Meßgrößen in einem Datenkonzentrator Telegramme mit netzweiter einheitlicher Meldungsnummer für die verschiedenen Meldungen gebildet und mit einem Zeitstempel versehen. Dabei wird davon ausgegangen, daß zwischen eigentlicher Meßwerterhebung am Meßwandler und Bildung des Telegramms ein vernachlässigbarer Zeitversatz von < 6 ms besteht. Eine Synchronisation der Meßwerterhebung ist nicht vorgesehen.

Der Erfindung liegt die Aufgabe zugrunde, das eingangs angegebene Verfahren so fortzuentwickeln, daß analoge Ausgangsmeßgrößen von Wandlern mit hoher Geschwindigkeit synchron zueinander erfaßt, gesammelt und zu den entsprechenden Schutzoder Feldgeräten übertragen werden können.

Zur Lösung dieser Aufgabe werden bei dem oben angegebenen Verfahren erfindungsgemäß mit einer Abtastrate, die um einen Faktor höher als die Mindestabtastrate ist, die analogen Ausgangsmeßgrößen in die digitalen Meßgrößen umgesetzt sowie deren Übertragung vorgenommen, wobei der Faktor ein ganzzahliger Teiler der Anzahl der Filterkoeffizienten jeweils eines FIR-Filters im Datenkonzentrator für jeden Wandler ist; aus im Datenkonzentrator jedem Wandler zugeordneten Zwischenspeichern werden mit dem Takt eines Taktgebers des Datenkonzentrators Daten in den FIR-Filtern vorgeordnete Nachzwischenspeicher übernommen, und
mittels eines Multiplexers wird aus den FIR-Filtern nachgeordneten Ausgangszwischenspeichern das Telegramm zusammengestellt.

Bei einer vorteilhaften Ausführungsform des erfindungsgemäßen Verfahrens wird mit den digitalen Meßgrößen mittels einer taktsynchronen Logikanordnung ein Sendetelegramm erzeugt und von jeweils einem Sender zu jeweils einem Datenempfänger am Datenkonzentrator übertragen.

Auch wird es als vorteilhaft erachtet, wenn mit dem Taktgeber des Datenkonzentrators ein Takt erzeugt wird, der gleiche Frequenz wie der Takt eines jeweils einem Zwischenspeicher vorgeordneten Datenempfängers aufweist.

Die Erfindung bezieht sich ferner auf eine Anordnung zum Erfassen und digitalen Übertragen von analogen Ausgangsmeßgrößen mehrerer Wandler zu einem Schutz- oder Feldgerät, bei der jedem Wandler ein Analog-Digital-Umsetzer zur Bildung digitaler Meßgrößen nachgeordnet ist und
die Ausgänge der Analog-Digital-Umsetzer mit einem Datenkonzentrator in Verbindung stehen, der an seinem mit dem Schutzoder Feldgerät verbundenen Ausgang ein Telegramm mit den digitalen Meßgrößen der Wandler mit einer vorgegebenen Mindestabtastrate abgibt. Eine solche Anordnung läßt sich der oben behandelten DE 36 03 358 C3 als bekannt entnehmen.

Um mit einer solchen Anordnung analoge Ausgangsmeßgrößen von Wandlern mit hoher Geschwindigkeit synchron zueinander erfassen, sammeln und übertragen zu können, arbeitet erfindungsgemäß jeder Analog-Digital-Umsetzer mit einer Abtastrate, die um einen Faktor höher als die Mindestabtastrate ist, wobei der Faktor ein ganzzahliger Teiler der Anzahl der Filterkoeffizienten jeweils eines FIR-Filters im Datenkonzentrator für jeden Wandler ist;
am Datenkonzentrator ist eingangsseitig jedem Wandler ein Zwischenspeicher zugeordnet, und an die Zwischenspeicher sind Nachzwischenspeicher angeschlossen, die ausgangsseitig mit den FIR-Filtern verbunden sind; ein Multiplexer ist an den FIR-Filtern nachgeordnete Ausgangszwischenspeicher angeschlossen.

Bei der erfindungsgemäßen Anordnung sind vorteilhafterweise dem jeweiligen Analog-Digital-Umsetzer eine taktsynchrone Logikanordnung zur Bildung eines Sendetelegramms und ein Sender nachgeordnet.

Ferner wird es als vorteilhaft erachtet, wenn der Datenkonzentrator einen Taktgeber besitzt, der bei gleicher Frequenz wie der Taktgeber des Datenempfängers arbeitet.

Zur weiteren Erläuterung der Erfindung ist in
Fig. 5 ein Ausführungsbeispiel der erfindungsgemäßen Anordnung, in
Fig. 6 ein detaillierte Darstellung eines Ausführungsbeispiels eines Primarteils mit den Elementen PC und Tx des Ausführungsbeispiels nach Fig. 5 und in
Fig. 7 ein detailliertes Ausführungsbeispiel eines Eingangsteils eines an die Anordnung gemäß Fig. 5 angeschlossenen, selbst nicht dargestellten Schutz- oder Feldgerätes dargestellt.

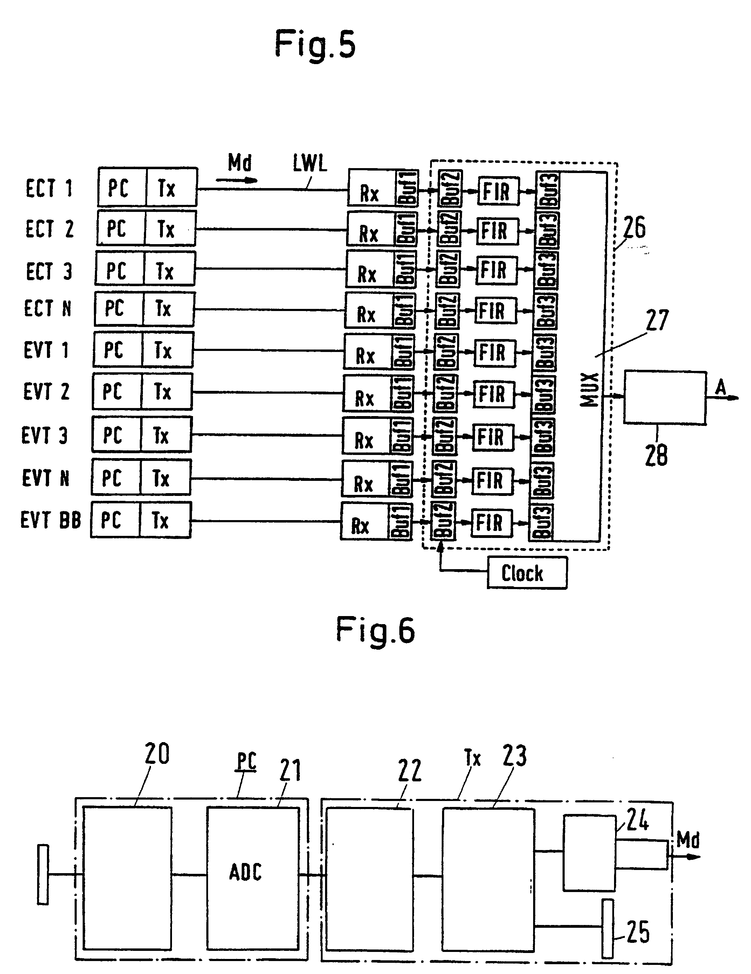

Bei dem Ausführungsbeispiel gemäß Fig. 5 werden die von (nicht gezeigten) Wandlern ECT1 bis EVTBB gelieferte analoge Ausgangsmeßgrößen in jeweils einem Baustein PC mit einer analogen Eingangsschaltung 20 und einem Analog-Digital-Umsetzer 21 (vgl. Fig. 6) abgetastet und gewandelt. Dem Baustein PC ist ein weiterer Baustein Tx nachgeordnet, der in einzelnen so aufgebaut sein kann, wie es der übrige Teil der Fig. 6 mit den Elementen 22, 23, 24 und 25 zeigt, wobei das Element 2 einen Rahmen-Logik-Baustein, das Element 23 einen Kodierbaustein, das Element 24 ein optisches Interface und das Element 25 ein elektrisches Interface darstellt.

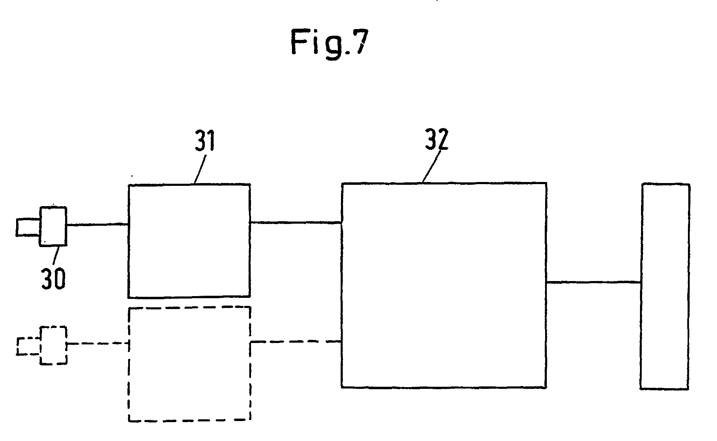

Die Übertragung der digitalen Meßgrößen Md am Ausgang der Bausteine Tx der Anordnung nach Fig. 5 zum Datenkonzentrator 26 erfolgt über Lichtwellenleiter LWL zunächst zu dem Datenkonzentrator 26 vorgeordneten Datenempfängern Rx, die eingangsseitig - wie Fig. 7 zeigt - mit Lichtempfängern 30 ausgerüstet sind. In den sich an die Datenempfänger Rx anschließenden Zwischenspeichern Buf1 werden die jeweils vom Datenempfänger Rx vollständig empfangenen Telegramme mit dem Takt des Datenempfängers Rx eingeschrieben. Jeder Datenempfänger Rx wird mit einem eigenen Takt betrieben. Dieser Takt ist synchron zum Takt des angeschlossenen Senders Tx.

Der Datenkonzentrator 26 enthält ferner FIR-Filter FIR, die jeweils Nachzwischenspeichern Buf2 nachgeordnet sind, die ihrerseits an die Zwischenspeicher Buf1 angeschlossen sind. Ausgangsseitig liegen an den Filtern FIR Ausgangszwischenspeicher Buf3. Den Ausgangszwischenspeichern Buf3 ist ein Multiplexer 27 nachgeordnet.

Mit diesem Aufbau werden die von dem Anlog-Digital-Umsetzer 21 taktsynchron zum Senden der jeweils vorher abgetasteten Ausgangsmeßgröße der Wandler abgetastet und gewandelt. Die A/D- Umsetzung und die Übertragung der Abtastwerte über die Lichtwellenleiter LWL erfolgt dabei mit einer um einen Faktor m gegenüber der Abtastrate des Ausgangssignals A am Ausgangsbaustein 28 des Multiplexers 27 höheren Abtastrate, wobei der Faktor m ein ganzzahliger Teiler der Anzahl der Filterkoeffizienten n des FIR- Filters FIR ist, das der Reduktion der Abtastrate der übertragenen digitalen Meßgröße Md um den Faktor m dient. Der Datenkonzentrator 26 wird mit einem eigenen Takt Clock betrieben. Dieser Takt ist asynchron zum Takt der Empfänger Rx, hat aber die gleiche Frequenz. In alle Nachzwischenspeicher Buf2 werden synchron mit dem Takt Clock die Daten der vollständig empfangenen Telegramme (also die Abtastwerte der einzelnen Wandler) aus dem Zwischenspeicher Buf1 übernommen. Anschließend werden alle in den Nachzwischenspeichern Buf2 enthaltenen Abtastwerte dem als ein Tiefpaß wirkenden FIR-Filter FIR zugeführt, um die Abtastrate der empfangenen Abtastwerte um den Faktor m zu reduzieren. Die Ausgangssignale der Filter FIR werden synchron mit dem Takt Clock mit einer um den Faktor m gegenüber der Taktrate am Nachzwischenspeicher Buf2 niedrigeren Abtastrate in die Ausgangszwischenspeicher Buf3 des Datenkonzentrators 26 eingeschrieben.

Zur Reduktion der Abtastrate werden z.B. die Koeffizienten des FIR-Filters alle auf 1 gesetzt und addiert. Erst nachdem z.B. 4 Abtastwerte in der Multiplizier-Addier-Einheit des FIR-Filters addiert wurden, wird die Summe vom Filter abgegeben, so daß im vorliegenden Beispiel eine Reduktion der Abtastrate um den Faktor 4 erfolgt ist.

Der Multiplexer 27 stellt ein aus den in seinen Ausgangszwischenspeichern Buf3 enthaltenen, in ihrer Abtastrate reduzierten Abtastwerten ein Sendetelegramm zusammen, das taktsyschron mit dem Takt Clock über den Ausgangsbaustein 28 auf den nicht gezeigten ausgangsseitigen Übertragungskanal des Datenkonzentrators 26 ausgegeben wird. Der Ausgangsbaustein kann optional über Schnittstellen nach IEC 60044-8 und IEC 61850-9-1 zum Anschluß von Fremdgeräten verfügen. Weiterhin kann der Takt Clock des Datenkonzentrators 26 optional einem externen Gerät zur Verfügung gestellt werden, das die vom Multiplexer 27 generierten Abtastwerte verarbeitet.

Bei der erfindungsgemäßen Anordnung wird also durch "Überabtasten" der analogen Ausgangsmeßgrößen der Wandler und synchrones "Hinunterabtasten" im Datenkonzentrator 26 der Phasenfehler der Abtastungen minimiert. Durch das Hinunterabtasten im Datenkonzentrator 26 wird eine Erhöhung der Auflösung der Samples erreicht.

Wie die Fig. 7 zeigt, können die vom Multiplexer 27 als Telegramm übermittelten Wandlerdaten in einem Kommunikationsmodul vorbereitet werden, das einem nicht dargestellten Schutzoder Feldgerät vorgeordnet ist. Das Kommunikationsmodul enthält eingangsseitig einen LWL-Empfänger 30 und weist außerdem eine integrierte Schaltung 31 und einen Baustein 32 mit Rahmendekoder mit Redundanzsteuerung und DPRAM sowie mit einer prgrammierbaren, integrierten Logik-Anordnung auf; dem Baustein 32 ist ein Interface nachgeordnet.

Im Schutz- oder Feldgerät findet ein Resampling der übertragenen Abtastwerte statt. Da sich im Signalweg keine Prozessoren (Mikrocontroller, digitale Signalprozessoren, ...) befinden, findet keine zeitliche Beeinflussung der Abtastungen durch Interruptlatenzzeiten statt. Die gesamte Signalvorverarbeitung geschieht ausschließlich durch synchron getaktete Logik. Durch hohe Abtastratenraten ( > 2 MAbtastungen/s) und hohe Übertragungsraten ( > 120 Mbit / s) wirkt die Übertragung der digitalen Meßgrößen zum digitalen Schutzgerät (1 ... 5 kAbtastungen/s) zeitlich transparent. Der erreichbare Phasenfehler ist dabei kleiner als 0,1°. Dadurch reduziert sich der Rechenaufwand in den Schutz- und Feldgeräten wesentlich (keine rechenzeitintensive Verfahren wie Interpolation der Meßwerte notwendig). Die Implementierung des vorgeschlagenen Verfahrens in zur Zeit existierende Geräte dieser Art vereinfacht sich dadurch wesentlich. Der Einsatz von synchron getakteter Logik vereinfacht den Aufbau von Redundanzsteuerungen im Datenkonzentrator und im Schutz- oder Feldgerät.
Die Übertragungsstrecken können als Lichtwellenleiter-Kabel oder als geschirmte Zweidrahtleitung (low - cost Anwendungen) ausgelegt sein. Beim Einsatz von Lichtwellenleitern, bei gleichzeitiger Verwendung von Lichtwellenleiter-Feldbustechnik für digital Ein- und Ausgänge wird es möglich, Schutzund Feldgeräte mit wesentlich verbesserten EMV - Eigenschaften zu realisieren. Durch Verwendung moderner optischer Sendedioden (VCSEL) und passiver optischer Splitter ist es möglich, bis zu 8 Schutz- oder Feldgeräte an einen Datenkonzentrator-Ausgang anzuschließen.

## Patentansprüche

1. Verfahren zum Erfassen und digitalen Übertragen von analogen Ausgangsmeßgrößen mehrerer Wandler zu einem Schutz- oder Feldgerät, bei dem
- die analogen Ausgangsmeßgrößen jedes Wandlers in digitale Meßgrößen umgesetzt werden,
- die digitalen Meßgrößen zu einem Datenkonzentrator übertragen werden,
- in dem Datenkonzentrator ein Telegramm mit den digitalen Meßgrößen der Wandler mit einer vorgegebenen Mindestabtastrate gebildet wird und
- das Telegramm zu dem Schutz- oder Feldgerät übertragen wird,
**dadurch gekennzeichnet, daß**
- mit einer Abtastrate, die um einen Faktor (m) höher als die Mindestabtastrate ist, die analogen Ausgangsmeßgrößen in die digitalen Meßgrößen (Md) umgesetzt sowie deren Übertragung vorgenommen wird,
- wobei der Faktor (m) ein ganzzahliger Teiler der Anzahl (n) der Filterkoeffizienten jeweils eines FIR-Filters (FIR) im Datenkonzentrator (26) für jeden Wandler (ECT1...EVTBB) ist,
- aus jedem Wandler (ECT1...EVTBB) zugeordneten Zwischenspeichern (Buf1) mit dem Takt (Clock) eines Taktgebers des Datenkonzentrators (26) Daten in den FIR-Filtern (FIR) vorgeordnete Nachzwischenspeicher (Buf2) übernommen werden und
- mittels eines Multiplexers (27) aus den FIR-Filtern (FIR) nachgeordneten Ausgangszwischenspeichern (Burf3) das Telegramm zusammengestellt wird.

2. Verfahren nach Anspruch 1,
**dadurch gekennzeichnet, daß**
- mit den digitalen Meßgrößen (Md) mittels einer taktsynchronen Logikanordnung ein Sendetelegramm erzeugt und von jeweils einem Sender zu jeweils einem Datenempfänger (Rx) am Datenkonzentrator (26) übertragen wird.

3. Verfahren nach Anspruch 1 oder 2,
**dadurch gekennzeichnet, daß**
- mit dem Taktgeber des Datenkonzentrators (26) ein Takt erzeugt wird, der eine gleiche Frequenz wie der Takt des eines einem Zwischenspeicher (Buf1) vorgeordneten Datenempfängers (Rx) ist.

4. Anordnung zum Erfassen und digitalen Übertragen von analogen Ausgangsmeßgrößen mehrerer Wandler zu einem Schutz- oder Feldgerät, bei der
- jedem Wandler ein Analog-Digital-Umsetzer zur Bildung digitaler Meßgrößen nachgeordnet ist und
- die Ausgänge der Analog-Digital-Umsetzer mit einem Datenkonzentrator in Verbindung stehen, der an seinem mit dem Schutz- oder Feldgerät verbundenen Ausgang ein Telegramm mit den digitalen Meßgrößen der Wandler mit einer vorgegebenen Mindestabtastrate abgibt,
**dadurch gekennzeichnet, daß**
- jeder Analog-Digital-Umsetzer (21) mit einer Abtastrate arbeitet, die um einen Faktor (m) höher als die Mindestabtastrate ist,
- wobei der Faktor (m) ein ganzzahliger Teiler der Anzahl (n) der Filterkoeffizienten jeweils eines FIR-Filters im Datenkonzentrator (26) für jeden Wandler (ECT1...EVTBB) ist,
- am Datenkonzentrator (26) eingangsseitig jedem Wandler (ECT1...EVTBB)ein Zwischenspeicher (Buf1) zugeordnet ist,
- an die Zwischenspeicher (Buf1) Nachzwischenspeicher (Buf2) angeschlossen sind, die ausgangsseitig mit den FIR-Filtern (FIR) verbunden sind, und
- ein Multiplexer (27) an den FIR-Filtern (FIR) nachgeordnete Ausgangszwischenspeicher (Buf3) angeschlossen ist.

5. Anordnung nach Anspruch 4,
**dadurch gekennzeichnet, daß**
- dem jeweiligen Analog-Digital-Umsetzer (21) eine taktsynchrone Logikanordnung zur Bildung eines Sendetelegramms und ein Sender (Tx) nachgeordnet sind.

6. Anordnung nach Anspruch 5,
**dadurch gekennzeichnet, daß**
- der Datenkonzentrator (26) einen Taktgeber besitzt, der eine gleiche Frequenz wie der Taktgeber jedem Zwischenspeicher (Buf1) ein Datenempfänger (Rx) aufweist.

## Claims

1. Method for detecting and digitally transmitting measured analogue output quantities of a number of transformers to a protective or field device, in which
- the measured analogue output quantities of each transformer are converted into measured digital quantities,
- the measured digital quantities are transmitted to a merging unit,
- in the merging unit, a message with the measured digital quantities of the transformers is formed with a predetermined minimum sampling rate and
- the message is transmitted to the protective or field device,
**characterized in that**
- the measured analogue output quantities are converted into the measured digital quantities (Md) and transmitted with a sampling rate which is higher than the minimum sampling rate by a factor (m),
- the factor (m) being an integral divider of the number (n) of the filter coefficients of in each case one FIR filter (FIR) in the merging unit (26) for each transformer (ECT1...EVTBB),
- from buffers (Buf1) allocated to each transformer (ECT1...EVTBB) data are transferred into post buffers (Buf2) which are preceding the FIR filters (FIR) with the clock (Clock) of a clock generator of the merging unit (26), and
- the message is assembled from the output buffers (Burf3) following the FIR filters (FIR) by means of a multiplexer (27).

2. Method according to Claim 1, **characterized in that**
- using the measured digital quantities (Md), a transmit message is generated by means of a clock-synchronous logic arrangement and transmitted by in each case one transmitter to in each case one data receiver (Rx) at the merging unit (26).

3. Method according to Claim 1 or 2, **characterized in that**
- using the clock generator of the merging unit (26), a clock is generated which is of the same frequency as the clock of the data receiver (Rx) preceding a buffer (Buf1).

4. Arrangement for detecting and digitally transmitting measured analogue output quantities of a number of transformers to a protective or field device, in which
- each transformer is followed by an analogue/digital converter for forming measured digital quantities, and
- the outputs of the analogue-digital converter are connected to a merging unit which delivers at its output connected to the protective or field device a message with the measured digital quantities of the transformers with a predetermined minimal sampling rate,
**characterized in that**
- each analogue/digital converter (21) operates with a sampling rate which is higher than the minimum sampling rate by a factor (m),
- the factor (m) being an integral divider of the number (n) of the filter coefficients of in each case one FIR filter in the merging unit (26) for each transformer (ECT1...EVTBB),
- at the input of the merging unit (26), each transformer (ECT1...EVTBB) is associated with a buffer (Buf1),
- post-buffers (Buf2), the outputs of which are connected to the FIR filters (FIR), are connected to the buffers (Buf1), and
- a multiplexer (27) is connected to output buffers (Buf3) following the FIR filters (FIR).

5. Arrangement according to Claim 4, **characterized in that**
- the respective analogue-digital converter (21) is followed by a clock-synchronous logic arrangement for forming a transmit message, and by a transmitter (Tx).

6. Arrangement according to Claim 5, **characterized in that**
- the merging unit (26) has a clock generator which has the same frequency as the clock generator of the data receiver (Rx).

## Revendications

1. Procédé pour la détection et la transmission numérique de grandeurs mesurées analogiques de sortie de plusieurs transducteurs à un outil ou appareil de protection, dans lequel
- on convertit les grandeurs mesurées analogiques de sortie de chaque transducteur en grandeurs mesurées numériques,
- on transmet les grandeurs mesurées numériques à un concentrateur de données,
- dans le concentrateur de données, on forme un télégramme avec les grandeurs mesurées numériques des transducteurs avec un taux d'échantillonnage minimal prédéterminé et
- on transmet le télégramme à l'outil ou appareil de protection,
**caractérisé par le fait que**
- avec un taux d'échantillonnage qui est supérieur d'un facteur (m) au taux d'échantillonnage minimal, on convertit les grandeurs mesurées analogiques de sortie en grandeurs mesurées numériques (Md) et on effectue leur transmission,
- le facteur (m) étant un diviseur entier du nombre (n) des coefficients de filtre à chaque fois d'un filtre FIR (FIR) dans le concentrateur de données (26) pour chaque transducteur (ECT1 à EVTBB),
- avec l'horloge (Clock) d'un générateur d'horloge dû concentrateur de données (26), on transfère des données depuis des mémoires intermédiaires (Buf1) associées à chaque transducteur (ECT1 à EVTBB) vers des mémoires intermédiaires aval (Buf2) placées du côté amont des filtres FIR (FIR) et
- au moyen d'un multiplexeur (27), on compose le télégramme à partir de mémoires intermédiaires de sortie (Buf3) placées du côté aval des filtres FIR (FIR).

2. Procédé selon la revendication 1,
**caractérisé par le fait que**,
- avec les grandeurs mesurées numériques (Md), on produit un télégramme d'émission au moyen d'un dispositif logique synchrone à l'horloge et on le transmet depuis à chaque fois un émetteur vers à chaque fois un récepteur de données (Rx) dans le concentrateur de données (26).

3. Procédé selon la revendication 1 ou 2,
**caractérisé par le fait que**,
- avec le générateur d'horloge du concentrateur de données (26), on produit une horloge qui a la même fréquence que l'horloge d'un récepteur de données (Rx) placé du côté amont d'une mémoire intermédiaire (Buf1).

4. Dispositif pour la détection et la transmission numérique de grandeurs mesurées analogiques de sortie de plusieurs transducteurs à un outil ou appareil de protection, dans lequel
- un convertisseur analogique-numérique est placé du côté aval de chaque transducteur pour la formation de grandeurs mesurées numériques, et
- les sorties des convertisseurs analogiques-numériques sont reliées à un concentrateur de données qui fournit à sa sortie, reliée à l'outil ou appareil de protection, un télégramme avec les grandeurs mesurées numériques des transducteurs, et ce avec un taux d'échantillonnage minimal prédéterminé,
**caractérisé par le fait que**
- chaque convertisseur analogique-numérique (21) travaille avec un taux d'échantillonnage qui est supérieur d'un facteur (m) au taux d'échantillonnage minimal,
- le facteur (m) étant un diviseur entier du nombre (n) des coefficients de filtre à chaque fois d'un filtre FIR dans le concentrateur de données (26) pour chaque transducteur (ECT1 à EVTBB),
- au niveau du concentrateur de données (26), côté entrée, une mémoire intermédiaire (Buf1) est associée à chaque transducteur (ECT1 à EVTBB).
- des mémoires intermédiaires aval (Buf2) qui sont reliées en sortie aux filtres FIR (FIR) sont raccordées aux mémoires intermédiaires (Buf1), et
- un multiplexeur (27) est raccordé à des mémoires intermédiaires de sortie (Buf3) placées du côté aval des filtres FIR (FIR).

5. Dispositif selon la revendication 4, **caractérisé par le fait que**
- un dispositif logique synchrone à !'horloge et destiné à la formation d'un télégramme d'émission ainsi qu'un émetteur (Tx) sont placés du côté aval du convertisseur analogique-numérique (21) respectif.

6. Dispositif selon la revendication 5, **caractérisé par le fait que**
- le concentrateur de données (26) comporte un générateur d'horloge qui a la même fréquence que le générateur d'horloge que comporte un récepteur de données (Rx) placé du côté amont de chaque mémoire intermédiaire (Buf1).
